# EUROPÄISCHE PATENTSCHRIFT

(11) **EP 1 457 247 B1**
(45) Veröffentlichungstag und Bekanntmachung des Hinweises auf die Patenterteilung: **26.01.2011**
(21) Anmeldenummer: 04100767.5
(22) Anmeldetag: 26.02.2004
(51) Int. Cl.: B01D 46/24

(54) **Luftfilter**
Air filter
Filtre à air

(30) Priorität: 14.03.2003 DE 10311640
(43) Veröffentlichungstag der Anmeldung: 15.09.2004
(73) Patentinhaber: MANN+HUMMEL GmbH, 71638 Ludwigsburg (DE)
(72) Erfinder: OELPKE, Reinhard, 67376, Harthausen (DE); SCHAERLUND, Jukka, 76877, Offenbach (DE)

(56) Entgegenhaltungen:
- EP-A- 1 222 951
- WO-A-02/49738
- WO-A-98/42429
- DE-A- 3 405 719
- DE-A- 4 126 324
- US-A- 5 277 157

## Beschreibung

### Stand der Technik

Die Erfindung betrifft einen Filter insbesondere für die Ansaugluft für Brennkraftmaschinen.

Aus der US 4,720,292 A ist ein Luftfilter mit folgenden Merkmalen bekannt: Ein Gehäuse ist mit einer axialen Auslassöffnung und einem im wesentlichen offenen zweiten Ende versehen, das durch eine entfernbare Abdeckung verschließbar ist. Am Umfang des Gehäuses ist eine Lufteinlassöffnung angeordnet. Im Gehäuse befindet sich ein im wesentlich zylindrisches Filterelement mit einem inneren Stützrohr, einem Filter mit einem äußeren Stützrohr, wobei das innere Filterelement in dem Gehäuse koaxial angeordnet ist. Die Abdichtung des Filterelements an dem Gehäuse erfolgt über eine ringförmige Endscheibe, die eine im wesentlichen zylindrische radial einwärts gerichtete Oberfläche aufweist und über einen inneren Abschnitt des Auslassteils geschoben wird. Bekannterweise werden die Filtereinsätze von Luftfiltern nach einer bestimmten Betriebszeit ausgetauscht. Je nach Staubanfall kann die Standzeit eines Luftfilters wenige Tage - z.B. Baumaschinen - bis zu mehreren Monaten betragen.

Ein Nachteil des bekannten Standes der Technik ist darin zu sehen, dass für den Luftfiltereinsatz ein relativ großes Gehäuse benötigt wird, welches im Reinluftbereich unnötig viel Raum beansprucht. Die bekannten Luftfilteranlagen für Verbrennungsmotoren sind hauptsächlich in der Nähe des Motors, meist im Motorraum angeordnet. Jedoch wird es immer schwieriger die Luftfilteranlage in diesem Bereich anzuordnen, da der Bauraum, welcher hier zur Verfügung steht, immer kleiner wird. Insbesondere bei Nutzfahrzeugen, speziell bei Traktoren ist der Platz durch die im Motorraum angeordneten Zusatzfunktionenselemente wie, Hydraulik- und Pneumatikelemente, sehr gering und durch eine im Motorraum, in der Nähe des Motors angeordnete Luftfilteranlage wird der Zugang zu diesen Systemen behindert. Weiterhin liegt hier die Ansaugstelle im Schmutzbereich des Fahrzeuges, das heißt, dass so eine erhöhte Partikelbelastung des Luftfilters auftritt und die Standzeit des Luftfilters dadurch stark verringert wird.

Die DE 79 02 819 schlägt hierzu ein Ansaugluftreinigungselement als Äußeres an den Aufbau eines Lastkraftwagens anbringbares Element vor, wobei das Element einen Vorfilter und Wasserabscheider, einen Zyklon und einen Luftfilter enthält. Diese Lösung ist jedoch individuell an den Aufbau der verschiedenen Lastkraftwagen gebunden und ist somit hinsichtlich der freien Platzierbarkeit stark gebunden und lässt sich in vielen Fällen zum Beispiel bei landwirtschaftlichen Maschinen mit deren besonderen Aufbauten gar nicht nutzen.

Die EP-A-1 222 951 zeigt einen Filter mit einem hohlzylindrischen Filtereinsatz mit Endscheiben. Eine der Endscheiben ist geschlossen und weist ein sich axial vom Filterelement erstreckendes Element auf. Die andere Endscheibe ist offen und hat eine konzentrische, radial wirkende Dichtung.

Aufgabe der Erfindung ist es nun, die oben genannten Nachteile zu vermeiden und Luftfilterelemente für ein universell einsetzbares und anbringbares Luftfiltersystem zu schaffen, welches einfach aufgebaut ist und sehr variabel bei der Platzierung ist. Die Luftfilterelemente sollen weiterhin eine sehr gute Abscheideleistung ermöglichen und sind dem speziellen Luftfiltersystem angepasst. Die Aufgabe wird durch die Merkmale des Patentanspruchs 1 gelöst.

### Vorteile der Erfindung

Der erfindungsgemäße Luftfilter insbesondere für die Reinigung von Verbrennungsluft von Brennkraftmaschinen, weist einen im wesentlichen metallfreien Filtereinsatz, welcher einen Hohlzylinder bildet, auf. An den Stirnseiten des Filtermediums des Filtereinsatzes sind Endscheiben angeordnet, wobei die eine Endscheibe einen geschlossenen Abschluss des Filterelementes bildet und ein sich axial vom Filterelement weg erstreckendes Griff-Element aufweist und die andere Endscheibe hohlzylindrisch ausgeführt ist und eine konzentrische radial wirkende elastische Dichtung aufweist. Das Griffelement erstreckt sich dabei radial nicht über die projezierte Fläche des Filtermediums hinweg und weist bevorzugt eine M-förmige Querschnittsform auf. Es sind jedoch auch weitere Formen denkbar, wobei eine einfache Handhabung im Vordergrund stehen sollte.

Gemäß einer Ausgestaltung der Erfindung ist das Filtermedium ein zick-zack-förmig gefaltetes Filterpapier und die Endscheiben sind aus einem thermoplastischen Kunststoff gefertigt. Hierbei werden die Endscheiben mit dem Filtermedium über ein Schweiß- oder Klebeverfahren unlösbar miteinander verbunden. Dadurch, dass die Endscheiben aus einem thermoplastischen Kunststoff gefertigt sind, ergibt sich für das einstückig mit der einen Endscheibe verbundene Griffelement die notwendige Festigkeit zur Handhabung des Luftfilters über das Griffelement. Bevorzugt ist die zweite Endscheibe ebenfalls aus einem thermoplastischen Kunststoff, es ist jedoch auch möglich hier einen weichen elastischen Kunststoff wie zum Beispiel ein thermoplastisches Elastomer zu verwenden. In diesem Fall kann die konzentrische radial wirkende Dichtung einstückig mit der Endscheibe ausgeführt sein.

In Vorteilhafterweise weist der Filtereinsatz an der Innenwandung oder an der Außenwandung des Filtermediums einen konzentrischen Stützkörper auf. Um bei großen Volumenströmen einen Stabilitätsverlust des Filtermediums zu vermeiden, wird dieses entweder durch den konzentrischen Stützkörper umschlossen bzw. legt es sich an den innen vorgesehenen konzentrischen Stützkörper an. Die Lage des Stützkörpers ist hierbei einerseits durch die Strömungsrichtung und andererseits durch bauraumbedingte Erfordernisse vorgegeben. Bevorzugt ist der Stützkörper hierbei im inneren des Filtermediums angeordnet und aus einem thermoplastischen Kunststoff hergestellt.

Eine zweckmäßige Ausbildung des Erfindungsgedankens ist dadurch gekennzeichnet, dass die hohlzylindrische Endscheibe einen hohlzylindrischen konzentrischen Kragen aufweist, welcher über Verstärkungsrippen mit der Endscheibe verbunden ist. Der Kragen weist hierbei einen ähnlichen Durchmesser wie der offene Innendurchmesser des Filtermediums auf und übernimmt hier mehrere Aufgaben. Einerseits werden Dichtungsaufgaben korrespondierend über den Kragen mit dem Filtergehäuse vorgenommen und andererseits dient der Kragen zur axialen Festlegung des Luftfilters beim Einbau in das Gehäuse. Zur Nutzung der gesamten Filtermedienfläche ist es notwendig den Kragen mit einer axialen Entfernung zum Filtermedium auszuführen. Zur Stabilität des Kragens sind zusätzlich Verstärkungsrippen zwischen Kragen und Endscheibe angeordnet um eine Verformung und Aufweitung des Kragens zu verhindern.

In einer bevorzugten Ausgestaltung der Erfindung weist der hohlzylindrische Kragen eine äußere umlaufende Nut auf, in dem die Dichtung in Form einer radial nach außen stehenden Lippe angeordnet ist. Die Dichtung kann dabei in 2K-Technonlogie an den Kragen angespritzt sein. Es kann eine in den Nutgrund eingebrachte O-ringförmige Dichtung sein oder auch sonstige im Stand der Technik bekannte Dichtungsmedien und -formen betreffen. Bevorzugt weist die Dichtlippe hierbei eine T-förmige Querschnittsform auf, wobei der Schenkel des T's nach außen ragt und in Art einer Scheibenwischerlippe an der Wandung, die es abzudichten gilt, anliegt. Da die Dichtlippe in diesem Fall eine gewisse räumliche Verformung erfährt, ist so ein Abheben der Dichtlippe über den Umfang und damit eine Undichtigkeit nahezu ausgeschlossen.

Die Erfindung ist dadurch gekennzeichnet, dass der Filtereinsatz über die radiale Dichtung korrespondierend dichtend mit einem kreisringförmigen Verbindungsprofil verbindbar ist, wobei das Verbindungsprofil bevorzugt in einem Luftfiltersystem zur Aufnahme der Luftfilter angeordnet ist. Im eingebauten Zustand, ist das axiale Ende des Kragens durch einen Anschlag im Verbindungsprofil axial begrenzt. Die Dichtung erfolgt über die radiale Dichtung korrespondierend mit dem Verbindungsprofil und im Anschluss an den Luftfilter ist über das Verbindungsprofil zusätzlich ein Sekundärelement dichtend mit dem Filtereinsatz verbindbar. Das Verbindungsprofil stellt also die Schnittstelle einerseits zur Verbindung von Luftfilter und Sekundärelement und andererseits zur Positionsfestlegung und Zentrierung der Filterelemente im Gehäuse dar. Die Verbindung erfolgt wie bei einem Stecker/Steckdosensystem, wobei der Luftfilter die Steckdose und das Sekundärelement den Stecker darstellt und das Verbindungsprofil eine Art Adapter darstellt.

Das hierzu vorgesehene Sekundärelement weist einen im wesentlichen metallfreien Filtereinsatz, welcher einen Hohlzylinder bildet, auf, wobei an den Stirnseiten des Filtermediums des Filtereinsatzes Endscheiben angeordnet sind. Hierbei bildet die eine Endscheibe einen geschlossenen Abschluss des Filterelements und die andere Endscheibe ist hohlzylindrisch ausgeführt, wobei die hohlzylindrische Endscheibe ein sich vom Filterelement weg erstreckendes konzentrisches Griffelement und eine konzentrische radial wirkende elastische Dichtung aufweist. Zur korrespondierenden Wirkung von Sekundärelement und Luftfilter ist die Anordnung und Ausführung der Endscheiben beim Sekundärelement unterschiedlich zum Luftfilter ausgeführt. Hier bildet die eine Endscheibe einen reinen dichtenden Abschluss des Sekundärfilterelementes und die andere Endscheibe übernimmt die Griff und die Dichtungsfunktion.

Gemäß einer Ausgestaltung des Sekundärelementes ist das Sekundärelement über die radiale Dichtung korrespondierend dichtend mit dem kreisringförmigen Verbindungsprofil verbindbar, wobei das kreisringförmige Griffelement einen geringeren Außendurchmesser als der Innendurchmesser des axialen Endes des Kragens des Luftfilters, wie oben beschrieben, aufweist und in diesen eingreift, wodurch eine Zentrierung der Filter zueinander erfolgt. Hier übernimmt das Griffelement einerseits die Funktion eines Griffes zur Handhabung des Sekundärfilterelementes und andererseits die Funktion einer Zentrierführung um den Luftfilter konzentrisch zum Sekundärelement auszurichten.

In Vorteilhafterweise ist das Filtermedium des Sekundärelementes ein Filtervlies und wenigstens eine Endscheibe ist aus einem thermoplastischen Kunststoff gefertigt. Derartige Filtermedien sind im Stand der Technik wohl bekannt und benötigen hier keine weiteren Erläuterungen. Bevorzugt ist die Endscheibe welche das Griffelement aufweist und zur zentrierenden Führung des Luftfilters vorgesehen ist, aus dem thermoplastischen Kunststoff wie zum Beispiel Polyamid oder Polypropylen gefertigt.

Eine zweckmäßige Ausbildung des Erfindungsgedankens ist dadurch gekennzeichnet, dass das Griffelement die Form eines mit Durchbrüchen versehenen aufgestellten Kragens aufweist, wobei außen am Umfang des Kragens eine Nut angeordnet ist welche eine Dichtung in Form einer radial nach außen stehenden Lippe aufnimmt. Die Dichtung kann hier ebenso wie beim Luftfilter in verschiedenster Art und Weise ausgeführt sein, bevorzugt ist sie jedoch auch in einer T-förmigen Querschnittsform ausgeführt und weist eine radial nach außen stehende Dichtlippe in Form einer Scheibenwischerlippe auf.

Bei dieser Art der Anordnung können Luftfilter und Sekundärelement perfekt zusammenspielen, das Sekundärelement übernimmt hierbei eine Art Sicherungsfunktion, da der überwiegende Großteil der Fremdstoffpartikel schon über einen eventuellen Vorfilter und den Luftfilter ausgefiltert sind. Da in dieser Anordnung, entgegen der bisherigen im Stand der Technik verwendeten Anordnung, das Sekundärfilterelement in Strömungsrichtung hinten verschlossen ist und die Luftströmung von außen nach innen und das Sekundärelement von innen nach außen durchströmt, können bei einer Fehlfunktion des Luftfilters oder bei einem Wechsel des Luftfilters größere Partikel und Teile im Sekundärelement aufgefangen werden ohne weiter in den Ansaugtrakt der Brennkraftmaschine zu gelangen. Gerade im Fall des Wechsels der Elemente ist diese Funktion wichtig, da die Möglichkeit einer fallengelassenen Schraube oder eines fallengelassenen Werkzeuges immer besteht. So wird erst das Luftfilterelement an seinem Griff aus dem Verbindungsprofil und damit aus dem Gehäuse herausgezogen und das Sekundärelement verbleibt vorerst in seiner Position und verschließt den Ansaugtrakt für eventuell hineinfallende Teile. Im Anschluss kann dann das Sekundärelelement entsprechend der Wechselvorgaben am Griffelement des Sekundärelementes aus dem Verbindungsprofil und dadurch dem Gehäuse herausgezogen werden und ebenfalls gewechselt werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Schnitt durch das erfindungsgemäße Luftfiltersystem,
- Figur 2: ebenfalls einen weiteren Schnitt durch das erfindungsgemäße Luftfiltersystem,
- Figur 3: eine Vergrößerung der Verbindungsstelle zwischen Hauptfilter- und Sekundärfilterelement,
- Figur 4: das Hauptfilterelement im Schnitt und
- Figur 5: zeigt einen Schnitt des Sekundärfilterelementes.

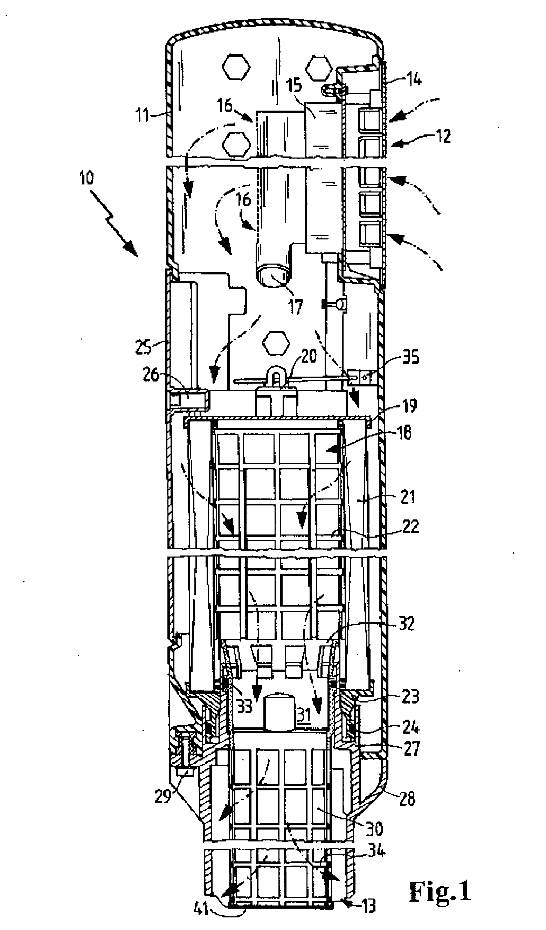

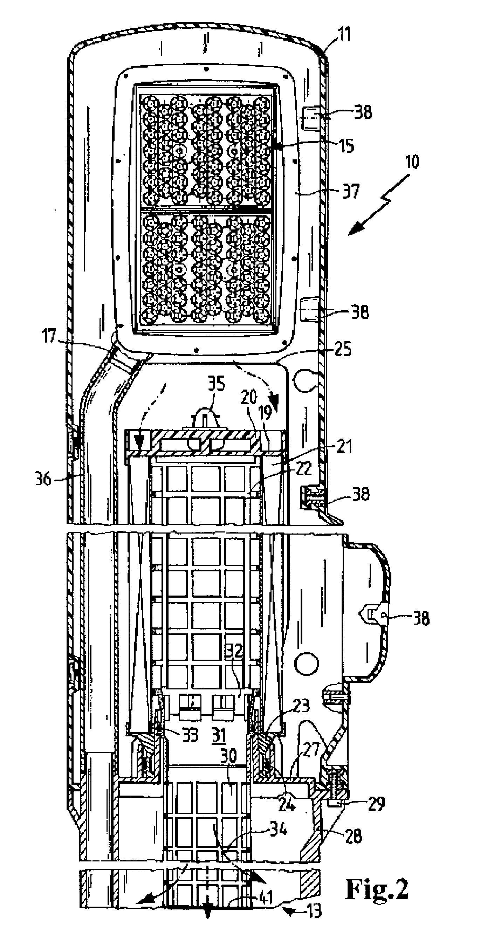

Die Figur 1 zeigt den erfindungsgemäßen Luftfilter 10 mit einem Gehäuse 11, welches einen Einlass 12 und einen Auslass 13 aufweist. Der Auslass 13 ist im weiteren Verlauf hier nicht weiter dargestellt mit dem Ansaugsystem der Brennkraftmaschine verbunden. Der Einlass 12 weist einen Einlassdeckel 14, zum Beispiel in Form einer Gitterstruktur, auf und die Luft strömt entsprechend der Pfeilrichtung direkt in einen Zyklonblock 15. Der Zyklonblock 15 weist einen Luftauslass für die den Zyklonblock 15 durchströmte, nun gereinigte Luft, auf sowie eine Staubaustragsöffnung 17. Der weitere Verlauf des Staubaustrages nach der Staubaustragsöffnung 17 wird in der Figur 2 näher beschrieben und ist in der Figur 1 hier nicht weiter dargestellt. Nach dem Luftauslass 16 strömt die Luft von außen nach innen durch den Hauptfilter 18. Dieser weist eine erste Endscheibe 19 auf, wobei einstückig aus der ersten Endscheibe 19 axial ein Griffelement 20 ausgeformt ist. Mit der ersten Endscheibe 19 ist ein hohlzylindrisches Filtermedium 21 verbunden, welches durch ein innenliegendes Stützrohr 22 unterstützt wird. Filtermedium 21 und Stützrohr 22 sind wiederum in Strömungsrichtung abwärts mit einer zweiten Endscheibe 23 verbunden. Diese weist eine Radialdichtung 24 auf. Der positionsgerechte Einbau des Hauptfilters 18 lässt sich beim Arretieren eines Gehäusedeckels 25 erkennen, da nur bei positionsgerechtem Einbau ein axiales Anschlagelement 26 des Gehäusedeckels 25 oberhalb der ersten Endscheibe 19 radial in das Gehäuse hereinragen kann. Das Hauptfilterelement 18 wird über ein Verbindungsprofil 27 mit einem Flansch 28, welcher über eine Schraubverbindung 29 mit dem Gehäuse 11 verbunden ist, in den Luftfilter 10 eingesetzt und findet so durch das Verbindungsprofil 27 einen axialen Anschlag und Zentrierung. Die Radialdichtung 24 dichtet das Hauptfilterelement 18 mit dem Verbindungsprofil 27 ab. Der Flansch 28 wird im weiteren Verlauf mit dem Ansaugsystem, welches hier nicht weiter dargestellt ist, der Brennkraftmaschine verbunden. Im Anschluss an den Hauptfilter 18 folgt ein Sekundärelement 30 mit einer ersten Endscheibe 31, woraus sich ein Kragen 32 axial in Richtung des Hauptfilterelements 18 erstreckt und der eine Radialdichtung 33 aufweist. Das Sekundärelement 30 weist ebenfalls ein innenliegendes Stützrohr 34 auf und wird mit einer verschlossenen Endscheibe 41 abgeschlossen. Über die Radialdichtung 33 stellt das Sekundärelement 30 ebenfalls eine dichte Verbindung mit dem Verbindungsprofil 27 her. Nach Einbau von Sekundärelement 30 und Hauptfilterelement 18 lassen sich diese über eine Klipsverbindung 35 im Gehäuse 11 arretieren.

Die Figur 2 zeigt eine weitere Schnittdarstellung des erfindungsgemäßen Filtersystems. Der Figur 1 entsprechende Bauteile sind mit den gleichen Bezugszeichen versehen. In dieser Figur ist der Kanal 36 zum Austragen der abgeschiedenen Staub- und Feststoffpartikel aus dem Zyklonblock, welcher außerhalb mit einer Unterdruckquelle verbunden ist, deutlich zu erkennen. Es ist zu sehen, dass die abgeschiedenen Staub- und Feststoffpartikel vollständig vom restlichen Innenraum des Gehäuses 11 durch den Kanal 36 getrennt werden. Ebenfalls ist in dieser Ansicht ein Befestigungsflansch 37 zur Anbringung des Einlassdeckels 14 zu erkennen. Die hier nicht dargestellten Funktionselemente wie zum Beispiel beleuchtungstechnische Anlagen und/oder Spiegel werden an Befestigungspunkten 38, welche über das Gehäuse 11 verteilt sind angebracht. Die Verkabelung für die Elektrifizierung und eventuelle Schalteinheiten oder Steuergeräte erfolgt dann innerhalb des Gehäuses 11.

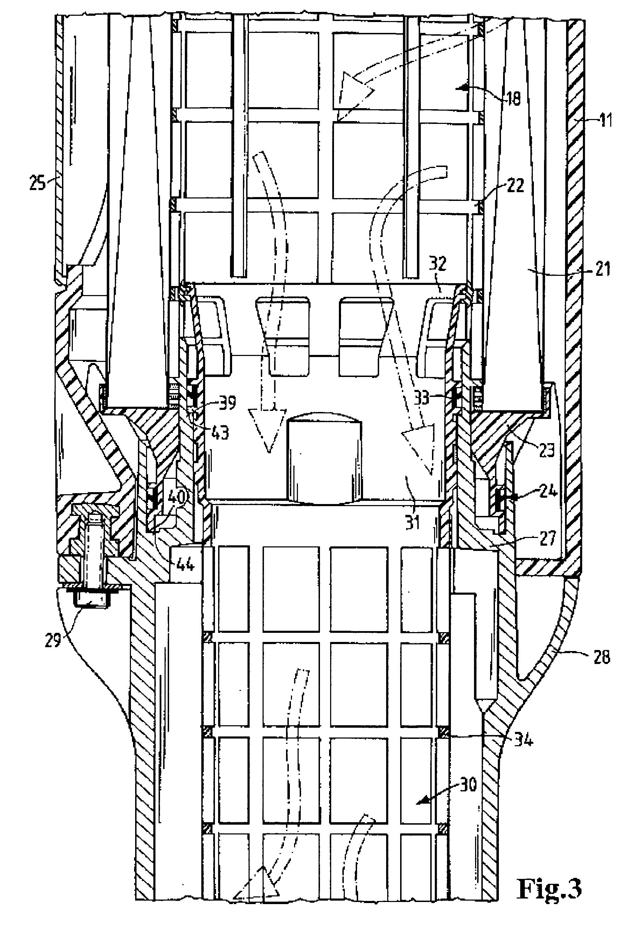

Die Figur 3 zeigt eine Vergrößerung des Verbindungsbereiches zwischen Hauptfilterelement 18 und Sekundärfilterelement 30 im Schnitt. Den Figuren 1 + 2 entsprechende Bauteile sind mit den gleichen Bezugszeichen versehen. In der Vergrößerung ist deutlich die Führung und Anlage von Hauptfilter 18 und Sekundärelement 30 durch das Verbindungsprofil 27 zu erkennen. Beim Zusammenbau wird das Sekundärelement 30 zuerst in die konzentrische Öffnung des Verbindungsprofils 27 eingeführt, wobei im Endbereich die im Kragen 32 des Sekundärelementes 30 integrierte Radialdichtung 33 an einer axialen Wand des Verbindungsprofiles 27 dichtend anliegt. In der axialen Wand des Verbindungsprofils 27 ist eine axiale Anschlagkante 43 angeordnet an der ein axialer Anschlag 39 des Sekundärelementes 30 in der Endposition anliegt und wodurch die axiale Endposition festgelegt wird. Daraufhin wird das Hauptfilterelement 18 in das Gehäuse 11 des Luftfilters 10 eingebracht wobei eine erste Führung und Zentrierung des Hauptfilters 18 durch den sich nach oben verbreiternden Kragen 32 des Sekundärfilterelementes 30 erfolgt. Der Hauptfilter 18 wird über den Kragen 32 hinübergeschoben, wobei daraufhin die Radialdichtung 24 der Endscheibe 23 des Hauptfilterelements 18 an einer weiteren axialen Wand des Verbindungsprofils 27 dichtend anliegt. Auch hier hat das Verbindungsprofil 27 eine axiale Anschlagkante 44, welche in Verbindung mit dem axialen Endanschlag 40 des Hauptfilterelements 18 für eine axiale Festlegung der Endposition sorgt.

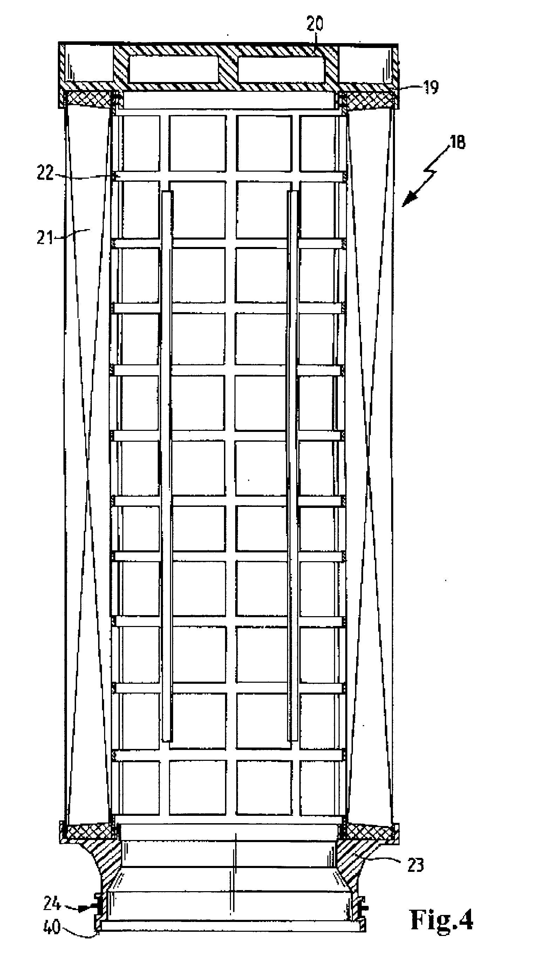

Die Figur 4 zeigt das Hauptfilterelement 18 in einer Schnittdarstellung. Den vorherigen Figuren entsprechende Bauteile sind mit den gleichen Bezugszeichen versehen. Das Hauptfilterelement 18 weist ein zick-zack-förmig gefaltetes Filtermedium 21 auf, welches durch ein im Inneren angeordnetes Stützrohr 22 unterstützt wird. Die Stirnseiten des Filtermediums 21 sind mit Endscheiben 19 und 23 abgeschlossen. Die erste geschlossene Endscheibe 19 weist ein sich axial nach oben erstreckendes Griffelement 20 auf, welches radial nicht über die projizierte Fläche des Filterelementes 18 hinausragt. Die Endscheibe 19 ist einstückig mit dem Griffelement 20 verbunden und unlösbar mit dem Filtermedium 21 und dem Stützrohr 22 verbunden. Dies kann zum Beispiel über Verschweißen oder Verkleben geschehen. Die zweite hohlzylindrische Endscheibe 23, welche ebenso unlösbar mit Filtermedium 21 und Stützrohr 22 verbunden ist, weist einen axialen Endanschlag 40 auf, welcher in Verbindung mit dem Verbindungsprofil 27 zur Positionsfestlegung des Hauptfilterelements 18 dient. Im Bereich des Endanschlags 40 weist die Endscheibe 23 eine umlaufende Nut mit einer darin angelegten Dichtung 24 auf. Die Dichtung weist eine T-förmige Querschnittsform auf, ist einstückig aus einem flexiblen, elastischen Kunststoff hergestellt und der wirksame Bereich der Radialdichtung ist in seiner Funktion mit einer Scheibenwischerlippe zu vergleichen.

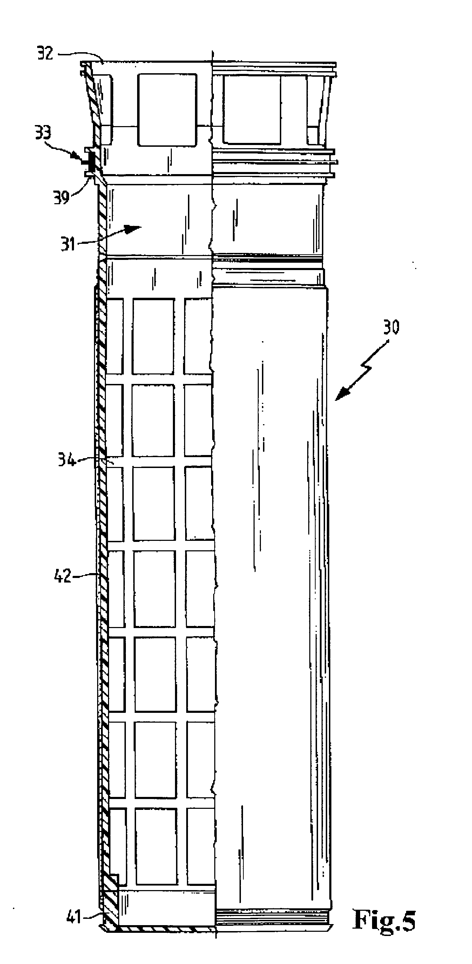

Die Figur 5 zeigt eine Schnittansicht des Sekundärelementes 30. Den vorherigen Figuren entsprechende Bauteile sind mit den gleichen Bezugszeichen versehen. Das Sekundärelement 30 weist als Filtermedium ein Filtervlies 42, welches durch ein innenliegendes Stützrohr 34 unterstützt wird, auf. Das eine Ende des Sekundärfilterelementes 30 ist mit einer Endscheibe 41 dicht verschlossen. Die andere Stirnseite des Sekundärfilterelementes 30 weist eine hohlzylindrische Endscheibe 31 mit einem sich nach oben erstrekkenden Kragen 32 auf. Der Kragen ist durch mehrere Durchbrüche unterbrochen wodurch er auch eine Grifffunktion übernehmen kann. Im mittleren Bereich der Endscheibe 31 ist eine umlaufende Nut angeordnet, welche eine Radialdichtung 33 aufnimmt. Die Radialdichtung 33 hat eine T-förmige Querschnittsform wobei die Dichtwirkung durch die scheibenwischerförmige Lippe erzielt wird. Die untere Kante 39 der umlaufenden Nut dient als Axialanschlag des Sekundärelementes beim Einsetzen in das Verbindungsprofil 27. Diese Kante 39 liegt nach dem richtigen Einsetzen des Sekundärelementes vollständig an der axialen Anschlagkante 43 des Verbindungsprofils 27 an. Das metallfreie Hauptfilterelement und das ebenso metallfreie Sekundärfilterelement sind problemlos zu entsorgen. Filterpapier, Vlies, Kunststoffmittelrohr und -griff, sowie die Kunststoffendscheiben können beispielsweise sehr einfach thermisch entsorgt werden. Durch die spezielle Ausformung der Endscheiben der beiden Filterelemente können diese einfach miteinander kombiniert werden und über das Verbindungsprofil des Gehäuses ihrer Funktion zugeführt werden.

## Patentansprüche

1. Luftfilter (10), insbesondere für die Reinigung von Verbrennungsluft für Brennkraftmaschinen, umfassend
- ein Gehäuse (11)
- einen im Wesentlichen metallfreien Filtereinsatz (18), welcher einen Hohlzylinder bildet, wobei an den Stirnseiten des Filtermediums (21) des Filtereinsatzes (18) Endscheiben angeordnet sind, wobei die eine Endscheibe (19) einen geschlossenen Abschluss des Filterelements bildet und ein sich axial vom Filterelement weg erstreckendes Griffelement (20) aufweist und die andere Endscheibe (23) hohlzylindrisch ausgeführt ist und eine konzentrische, radial wirkende, elastische Dichtung (24) aufweist, wobei die hohlzylindrische Endscheibe (23) einen sich axial erstreckenden, hohlzylindrischen und konzentrischen Kragen aufweist,
- ein kreisringförmiges Verbindungsprofil (27) des Gehäuses im Inneren des Gehäuses zur Verbindung des Gehäuses (10) mit dem Filtereinsatz (18)
- ein Sekundärelement
**dadurch gekennzeichnet, dass** der Filtereinsatz (18) über die radiale Dichtung (24) korrespondierend dichtend mit dem kreisringförmigen Verbindungsprofil (27) verbindbar ist, wobei das axiale Ende des Kragens durch das Verbindungsprofil (27) axial durch einen Anschlag begrenzt ist und über das Verbindungsprofil (27) das Sekundärelement (30) dichtend mit dem Filtereinsatz (18) verbindbar ist.

2. Luftfilter (10) nach Anspruch 1, **dadurch gekennzeichnet, dass** das Filtermedium (21) zick-zack-förmig gefaltet ist und wenigstens die Endscheibe (19) mit dem Griffelement (20) aus einem thermoplastischen Kunststoff ist.

3. Luftfilter (10) nach einem der vorhergehenden Ansprüche, **dadurch gekennzeichnet, dass** der Filtereinsatz (18) an der Innenwandung oder der Außenwandung des Filtermediums (21) einen konzentrischen Stützkörper (22) aufweist.

4. Luftfilter (10) nach einem der vorhergehenden Ansprüche, **dadurch gekennzeichnet, dass** der sich axial erstreckenden, hohlzylindrischen und konzentrischen Kragen über Verstärkungsrippen mit der Endscheibe (23) verbunden ist.

5. Luftfilter (10) nach Anspruch 4, **dadurch gekennzeichnet, dass** der hohlzylindrische Kragen eine äußere umlaufende Nut aufweist in dem die Dichtung (24) in Form einer radial nach außen stehenden Lippe angeordnet ist.

6. Luftfilter (10) nach einem der vorherigen Ansprüche mit einem Sekundärelement (30), **dadurch gekennzeichnet, dass** das Sekundärelement (30) einen im Wesentlichen metallfreien Filtereinsatz aufweist, welcher einen Hohlzylinder bildet, wobei an den Stirnseiten des Filtermediums des Filtereinsatzes Endscheiben angeordnet sind, wobei die eine Endscheibe 41 einen geschlossenen Abschluss des Filterelements bildet und die andere Endscheibe 31 hohlzylindrisch ausgeführt ist und ein sich axial vom Filterelement weg erstreckendes konzentrisches Griffelement und eine konzentrische, radial wirkende, elastische Dichtung (33) aufweist.

7. Luftfilter (10) nach Anspruch 6, **dadurch gekennzeichnet, dass** das Sekundärelement (30) über die radiale Dichtung (33) korrespondierend dichtend mit dem kreisringförmigen Verbindungsprofil (27) verbindbar ist, wobei das kreisringförmige Griffelement einen geringeren Außendurchmesser als der Innendurchmesser des axialen Endes des Kragens des Filtereinsatzes (18) aufweist und in diesen eingreift, wodurch eine Zentrierung der Filter zueinander erfolgt.

8. Luftfilter (10) nach einem der Ansprüche 6 bis 7, **dadurch gekennzeichnet, dass** das Filtermedium des Sekundärelements (30) ein Filtervlies ist und wenigstens eine Endscheibe aus einem thermoplastischen Kunststoff ist.

9. Luftfilter (10) nach einem der Ansprüche 6 bis 8, **dadurch gekennzeichnet, dass** das Griffelement des Sekundärelements (30) die Form eines mit Durchbrüchen versehenen aufgestellten Kragens aufweist, wobei außen im Kragen eine Nut angeordnet ist, welche die Dichtung (33) in Form einer radial nach außen stehenden Lippe aufnimmt.

## Claims

1. Air filter (10) in particular for cleaning the combustion air for internal combustion engines, comprising
- a housing (11)
- a substantially metal-free filter insert (18) forming a hollow cylinder, end plates being disposed at the front sides of the filter medium (21) of the filter insert (18), one end plate (19) forming a closed endpiece of the filter element and featuring a grip element (20) extending axially away from the filter element and the other end plate (23) being designed hollow cylindrical and featuring a concentric, radially acting elastic sealing (24), the hollow cylindrical end plate (23) featuring an axially extending hollow cylindrical and concentric collar,
- a circular-shaped connecting profile (27) of the housing inside the housing for connecting the housing (10) with the filter insert (18)
- a secondary element
**characterized in that** the filter insert (18) can be connected correspondingly sealingly with the circular-shaped connecting profile (27) via the radial sealing (24), the axial end of the collar crossing the connecting profile (27) being axially limited by a stop and the secondary element (30) being sealingly connectable with the filter insert (18) via the connecting profile (27).

2. Air filter (10) according to claim 1, **characterized in that** the filter medium (21) has a fanfold design and that at least the end plate (19) with the grip element (20) is made of a thermoplastic material.

3. Air filter (10) according to one of the above claims, **characterized in that** the filter insert (18) features a concentric supporting element (22) at the interior wall or the exterior wall of the filter medium (21).

4. Air filter (10) according to one of the above claims, **characterized in that** the axially extending hollow cylindrical and concentric collar is connected with the end plate (23) via the reinforcing ribs.

5. Air filter (10) according to claim 4, **characterized in that** the hollow cylindrical collar features an exterior circumferential groove where the sealing (24) is disposed in the shape of a radially outwards projecting lip.

6. Air filter (10) according to one of the above claims with a secondary element (30), **characterized in that** the secondary element (30) features a substantially metal-free filter insert forming a hollow cylinder, end plates being disposed at the front sides of the filter medium of the filter insert, one end plate 41 forming a closed endpiece of the filter element and the other end plate 31 being designed hollow cylindrical and featuring a concentric grip element extending axially away from the filter element and a concentric, radially acting elastic sealing (33).

7. Air filter (10) according to claim 6, **characterized in that** the secondary element (30) can be connected correspondingly sealingly with the circular-shaped connecting profile (27) via the radial sealing (33), the circular-shaped grip element featuring a smaller external diameter than the inner diameter of the axial end of the collar of the filter insert (18) and engaging therewith, therefore enabling the filters to be centered in relation to each other.

8. Air filter (10) according to one of the claims 6 to 7, **characterized in that** the filter medium of the secondary element (30) is a filter fleece and that at least one end plate is made of a thermoplastic material.

9. Air filter (10) according to one of the claims 6 to 8, **characterized in that** the grip element of the secondary element (30) features the shape of a vertical collar provided with openings, a groove being disposed outside in the collar which receives the sealing (33) in the shape of an outwards projecting lip.

## Revendications

1. Filtre à air (10), en particulier pour l'épuration d'air de combustion pour moteurs à combustion interne, comprenant
- un boîtier (11)
- un insert de filtre (18) essentiellement exempt de métal formant un cylindre creux, des plaques d'extrémité étant disposées sur les faces frontales du milieu filtrant (21) de l'insert de filtre (18), l'une des plaques d'extrémité (19) formant une bordure fermée de l'élément filtrant et présentant un élément de poignée (20) évoluant en sens axial dans le sens opposé à l'élément filtrant et l'autre plaque d'extrémité (23) ayant la forme d'un cylindre creux et présentant un joint d'étanchéité (24) concentrique, à effet radial et élastique, la plaque d'extrémité en forme de cylindre creux (23) présentant un col évoluant en sens axial, en forme de cylindre creux et concentrique,
- un profilé de jonction (27) en anneau de cercle du boîtier à l'intérieur du boîtier servant à relier le boîtier (10) à l'insert de filtre (18)
- un élément secondaire
**caractérisé en ce que** l'insert de filtre (18) peut être relié de manière correspondante, avec effet d'étanchéité, au moyen du joint d'étanchéité radial (24), au profilé de jonction (27) en anneau de cercle, l'extrémité axiale du col traversant le profilé de jonction (27) étant limitée en sens axial par une butée et l'élément secondaire (30) pouvant être relié avec effet d'étanchéité à l'insert de filtre (18) par le profilé de jonction (27).

2. Filtre à air (10) selon la revendication 1, **caractérisé en ce que** le milieu filtrant (21) est plié en accordéon et qu'au moins la plaque d'extrémité (19) avec l'élément de poignée (20) est faite d'une matière thermoplastique.

3. Filtre à air (10) selon l'une des revendications précédentes, **caractérisé en ce que** l'insert de filtre (18) présente un corps d'appui (22) concentrique sur la paroi intérieure ou sur la paroi extérieure du milieu filtrant (21).

4. Filtre à air (10) selon l'une des revendications précédentes, **caractérisé en ce que** le col évoluant en sens axial, en forme de cylindre creux et concentrique est relié à la plaque d'extrémité (23) au moyen de nervures de renfort.

5. Filtre à air (10) selon la revendication 4, **caractérisé en ce que** le col en forme de cylindre creux présente une rainure circulaire extérieure dans laquelle le joint d'étanchéité (24) est disposé en forme de lèvre orientée vers l'extérieur en sens radial.

6. Filtre à air (10) selon l'une des revendications précédentes avec un élément secondaire (30), **caractérisé en ce que** l'élément secondaire (30) présente un insert de filtre essentiellement exempt de métal formant un cylindre creux, des plaques d'extrémité étant disposées sur les faces frontales du milieu filtrant de l'insert de filtre, l'une des plaques d'extrémité (41) formant une bordure fermée de l'élément filtrant et l'autre plaque d'extrémité (31) ayant la forme d'un cylindre creux et présentant un élément de poignée concentrique évoluant en sens axial dans le sens opposé à l'élément filtrant et un joint d'étanchéité concentrique, à effet radial et élastique (33).

7. Filtre à air (10) selon la revendication 6, **caractérisé en ce que** l'élément secondaire (30) peut être relié de manière correspondante, avec effet d'étanchéité, au moyen du joint d'étanchéité radial (33), au profilé de jonction (27) en anneau de cercle, l'élément de poignée en anneau de cercle ayant un diamètre extérieur inférieur au diamètre intérieur de l'extrémité axiale du col de l'insert de filtre (18) et étant en prise avec ce dernier, ce qui entraîne le centrage des filtres les uns par rapport aux autres.

8. Filtre à air (10) selon l'une des revendications 6 à 7, **caractérisé en ce que** le milieu filtrant de l'élément secondaire (30) est un non-tissé filtrant et qu'au moins une plaque d'extrémité est une plaque d'extrémité en une matière thermoplastique.

9. Filtre à air (10) selon l'une des revendications 6 à 8, **caractérisé en ce que** l'élément de poignée de l'élément secondaire (30) a la forme d'un col vertical pourvu d'ouvertures, une rainure servant de logement au joint d'étanchéité (33) sous forme de lèvre orientée vers l'extérieur en sens radial étant disposée à l'extérieur dans le col.
